(19) Europäisches Patentamt
European Patent Office
Office européen des brevets

(11) **EP 2 816 332 B1**

## (12) EUROPEAN PATENT SPECIFICATION

(45) Date of publication and mention
of the grant of the patent:
**30.11.2016 Bulletin 2016/48**

(51) Int Cl.:
**G01H 17/00** *(2006.01)*

(21) Application number: **13172316.5**

(22) Date of filing: **17.06.2013**

(54) **Method and computer product for modeling the sound emission and propagation of systems over a wide frequency range**

Verfahren und Computerprodukt zur Modellierung der Schallabstrahlung und -vermehrung von Systemen über einen großen Frequenzbereich hinweg

Procédé et produit informatique pour modéliser les émissions sonores et propagation de systèmes sur une large gamme de fréquences

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.12.2014 Bulletin 2014/52**

(73) Proprietor: **Siemens Industry Software NV**
**3001 Leuven (BE)**

(72) Inventors:
- **Bériot, Hadrien**
**78110 Le Vesinet (FR)**
- **Tournour, Michel André**
**3360 Bierbeek (BE)**
- **Donders, Stijn Willem Hugo**
**3010 Leuven (BE)**

(74) Representative: **Maier, Daniel Oliver**
**Siemens AG**
**Postfach 22 16 34**
**80506 München (DE)**

(56) References cited:
**US-A- 5 963 459**

- **L. MEIROVITCH, H. BARUH: "On the inclusion principle for the hierarchical finite element method", INTERNATIONAL JOURNAL FOR NUMERICAL METHODS IN ENGINEERING, vol. 19, 1983, pages 281-291, XP002717323,**
- **BERT VAN GENECHTEN ET AL: "An efficient Wave Based Method for solving Helmholtz problems in three-dimensional bounded domains", ENGINEERING ANALYSIS WITH BOUNDARY ELEMENTS, ELSEVIER, AMSTERDAM, NL, vol. 36, no. 1, 30 June 2011 (2011-06-30), pages 63-75, XP028303830, ISSN: 0955-7997, DOI: 10.1016/J.ENGANABOUND.2011.07.011 [retrieved on 2011-08-10]**
- **A. D. GRIGORIEV, R. V. SALIMOV, R. I. TICHONOV: "Optimization of the fast frequency sweep parameters in high frequency electromagnetic field simulation by vector finite element method", SPIE, SARATOV FALL MEETING 2005: LASER PHYSICS AND PHOTONICS, SPETROSCOPY AND MOLECULAR MODELING VI, vol. 6165, no. 616505, 2006, XP002717324,**

## Description

## Technical field of the invention

The invention relates to the field of predicting the emission by a source of sound and its propagation within a surrounding medium, the source and the medium forming a system. The prediction should be carried out over a wide frequency range. The system could be any one, essentially a mechanical system like a vehicle or an electronic device.

## Background of the invention

Health effects from noise are more and more recognized and are becoming a public health problem. Indeed, exposure to elevated sound levels is known to be very dangerous and may cause hearing impairment, hypertension and sleep disturbance, among others. The most significant risks are induced by vehicle and aircraft noise, extended exposure to loud music, and industrial noise.

Those considerations have led noise reduction to become a mainstream issue for today's manufacturers. In the automotive industry for instance, sound emission is nowadays a full-fledged specification in car design. First, customers would like to acquire quieter and quieter products for their own comfort. Then, authorized noise limits are tighter for cars, lorries and buses, without mentioning other sources.

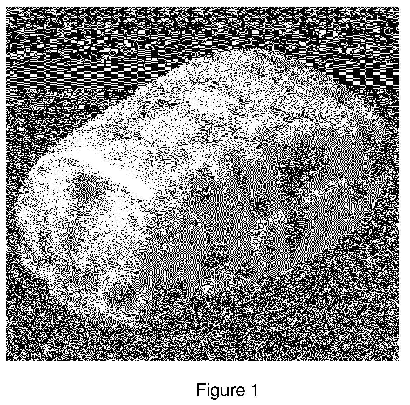

At present, noise reduction is still limited by the lack of efficient predictive modeling tools to simulate the sound emission of mechanical systems. Improving computational acoustic simulations is essential to optimize product designs, while avoiding late and expensive physical testing. Figure 1 presents an example of a computed sound pressure inside a car cavity at a given frequency, wherein the darker the areas, the higher the sound pressure inside the cavity.

By definition, a sound is a mechanical wave that is an oscillation of pressure transmitted through a solid, liquid, or gas, composed of frequencies within the range of hearing. Sound that is perceptible by humans has frequencies ranging from about 20 Hz to 20,000 Hz. In air, at standard temperature and pressure, the corresponding wavelengths of sound waves range from 17 m to 17 mm. A sound field in a given system is properly defined if sound pressure and acoustic velocity are known at all points of the system.

Acoustic wave propagation in a medium is a complex phenomenon. In order to describe it, physical models have been built by scientists, based on several approximations. The simulation of wave propagation is approximated by a set of partial differential equations. The analytical resolution of those equations has no simple solution and the acoustic field solution has to be approximated using a computational method.

All major categories of numerical schemes have been applied to acoustics, including Finite Element Methods (FEM), Finite Difference Method (FDM), Discontinuous Galerkin Methods (DGM) and Boundary Element Methods (BEM). These methods can be categorized based on the use of time-domain or frequency-domain solvers. Frequency-domain solvers are better suited for permanent regimes (engine running), while time-domain solvers are needed to study transient applications (door closing). Also, one can distinguish between domain methods, where the fluid region of propagation needs to be fully represented, and boundary methods which rely on a boundary integral representation of the initial problem. Finite Elements and Discontinuous Galerkin Methods naturally cope with unstructured meshes, to be defined below, and are better suited for complex real-life engineering problems. FEM is typically suited for frequency domain applications and DGM for transient applications, but DGM may also be used in the frequency domain context.

The FEM remains the most popular method in the industry sector. It is a numerical method for solving partial differential equations. Standard FEM procedure can be characterized by three main steps:

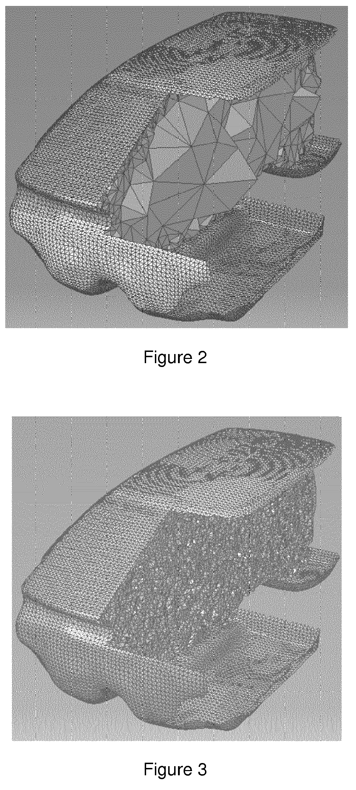

1) The division of a given mechanical system into many small, nonoverlapping and simple 'elements'. The set of those simple elements or subdomains is called a 'mesh'. It describes the geometry and, later, will include the properties and boundary conditions which define the problem of the simulation of wave emission and propagation. The process of creating a mesh is referred to as the meshing. Different shapes of elements are typically required and handled by commercial FEM and DGM solutions (triangle, quadrangle, hexahedron, tetrahedron, prism, pyramid...).Two meshes of the same car cavity are given as an illustration in Figure 2 and Figure 3.

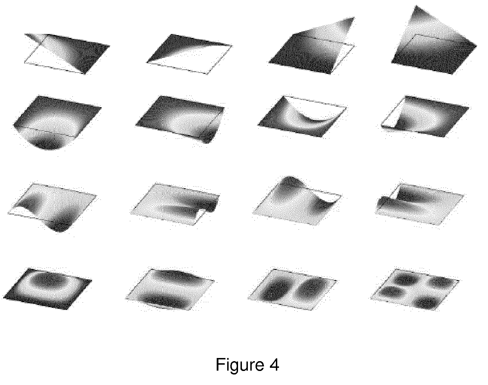

2) Piecewise polynomial approximations (based on shape functions) are then constructed over each of these elements to approximate the field of interest (in our case the pressure or the acoustic velocity). Figure 4 discloses 16 examples of shape functions. The contributions of the shape functions to the field are the unknowns of the approximated problem. These discrete unknowns are linked on each subdomain by a set of elementary equations which involve time consuming quadrature rules. All these local contributions (the elementary matrices) are then recombined into a global system of equations (the system matrix). All this process is referred to as the assembly of the system.

In Figure 4, some of these shape functions are rather simple, looking like flat squares of which one corner has been elevated. Other, more difficult to describe, include bosses and recesses, representing local minima and maxima distributed over the element domain. The one skilled in the art is familiar with these shape functions. These shape functions build a hierarchical basis to be explained herein below.

3) The equation solving consists in the solving of a set of linear equations involving the contribution of all the shape functions to the global problem. A sparse linear solver is used at this step. The system matrix assembled and solved at each frequency is denoted $Z(f)$. The dimension of this matrix is directly linked to the total number of shape functions in the system, which is given by the number of elements in the mesh times the number of polynomial shape functions inside each of them. In most cases, the matrix takes the following form:

$$Z(f) = K - (2\pi f)^2 M + C(f)$$

where $K$ is the so-called stiffness matrix, $M$ the so-called mass matrix and $C(f)$ contains all other terms generally coming from boundary conditions. It is important to note that the mass and stiffness matrices are generally frequency independent and thus, they need to be computed only once and not at each frequency. This is what is typically done in standard FEM commercial solutions.

Each simple element, defined during the meshing, can be characterized by two main features:

- the dimension of the element h which is a geometrical parameter,
- the polynomial degree $P$ of polynomials used to approximate the solutions (also called the order of interpolation of the given element).

The choice of these parameters $h$ and $P$ is an important aspect to be considered in acoustic simulation. Indeed, when solving in the frequency domain, where high-order (high $P$) method and multi-frequency solutions are often required, it is important to propose an efficient strategy to avoid assembling the algebraic system of equations repeatedly at each frequency. This step of assembly can indeed be very computationally intensive in those cases.

The choice of $h$ can be done by comparison with the frequency of sound which is studied. When solving in the frequency domain, each individual frequency of interest has to be solved independently. The list of frequencies is provided by the user, in a list sorted in ascending order $F = [f_1, f_2, ..., f_{Nf}]$. The total number of frequencies $N_f$ depends on the application, but it can be large, as the user may want to cover the full audio frequency range with a fine frequency increment. In standard low-order FEM, the meshing operation is designed based on the frequency $f_{Nf}$ in order to guarantee that an acoustic plane wave propagating at the frequency of interest has enough resolution. This "rule of thumb" is an approximation because the solution is not known *a priori* and will be more complex than just a plane wave. For linear finite elements, $h$ can be approximated by the following equation:

$$h = \frac{c_0}{6 f}$$

with $c_0$ being the speed of sound in the propagation medium, $f$ the frequency to be studied and h being the typical mesh dimension required for the meshing operation.

This formula indicates that low frequencies (large $h$) are less demanding than the high frequencies. This is illustrated in Figure 2 and Figure 3 where a coarse mesh is required for low frequencies (Figure 2) and a refined mesh for the high frequencies (Figure 3) respectively. Obviously, the numerical cost associated with the coarse mesh is orders of magnitude smaller than the one associated with the thin mesh as the number of elements and corresponding equations to resolve will be much smaller. For practical reasons however, mostly because the meshing operation is cumbersome and cannot be automated, users often use a single mesh (the refined mesh) to compute the full frequency range $F = [f_1, f_2, ..., f_{Nf}]$. This implies a huge loss in terms of performance as the low frequencies will typically be over-resolved.

The choice of $P$ can be adapted locally based on some knowledge of the complexity of the field to be locally represented. For example, if the field is smooth and oscillating a lot, a high-order approximation (i.e. involving many shape functions) will be needed locally. Finding the correct number of shape functions to apply on each individual element is crucial as the computational cost of the method (the assembly and the solving procedures) is directly proportional to the number of shape involved.

There are two ways of fixing the order inside the elements, either with an *a priori* or an *a posteriori* error estimator. As indicated by its name, an estimator estimates the accuracy of a given solution, and helps "modeling engineers" to determine their set of $P$ parameters. An *a posteriori* estimator refines $P$ parameter after the equation solving, whereas an *a priori* estimator determines $P$ parameter before the equation solving.

*A priori* error estimator:

In applications of practical interest, the exact solution cannot be guessed before the computation. However, complex solutions are based on linear combinations of simple elementary solutions of the governing equation which are known prior to the computation (like plane wave solutions). A "rule of thumb" can be derived to fix the order just like for standard FEM to fix the mesh size. For instance at low frequency, the acoustic wavelength is typically larger and therefore low polynomial orders (fewer shape functions) can be used. At high frequency, waves typically oscillate more and higher orders should be used.

*A posteriori* error estimator:

In that case, a first inexpensive solution is computed, typically at low-order. Based on an *a posteriori* analysis of that first rough solution (looking for instance at the residual of the initial operator or at the behaviour of the solution derivatives), the orders inside each elements are typically increased. Another solution is computed and so on until the *a posteriori* error process judges the solution satisfactory everywhere. This is referred to as a P-adaptive method, where a sequence of converging solutions with incremental complexity is generated to solve a single frequency. *P*-adaptive methods are not widely used as such, they can be seen as a particular case of the more general *hP*-adaptive methods, which will be introduced hereafter.

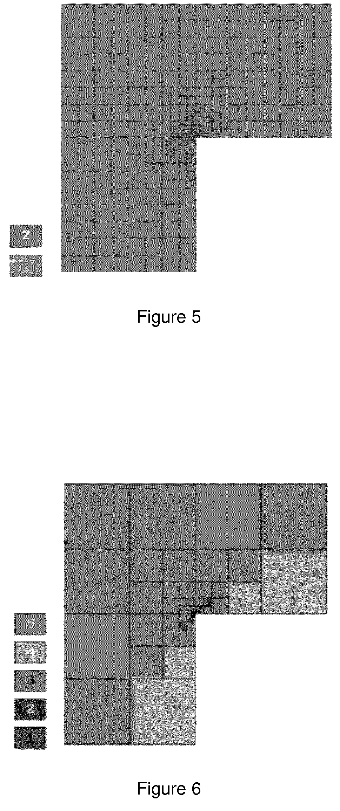

Several methods have been implemented in the prior art to model more accurately and more efficiently wave propagation systems. A first approach is the following one and is illustrated in Figure 5 and Figure 6. *hP*-adaptive FEM (and *hP*-adaptive DGM) is a general version of the Finite Element Method (and Discontinuous Galerkin Methods) that employs elements of variable dimensions *h* and polynomial degree *P* which are adjusted locally based on *a posteriori* error estimators. The origins of *hP*-FEM date back to the pioneering work of Ivo Babuska et al. [I. Babuska, B.Q. Guo: The h, p and h-p version of the finite element method: basis theory and applications, Advances in Engineering Software, Volume 15, Issue 3-4, 1992]. Babuska discovered that the finite element method converges exponentially fast when the computational scheme is refined using a suitable combination of *h*-refinements (dividing elements into smaller ones) and P-refinements (increasing their polynomial degree). The logic is very different from a standard FEM computation as rather than assembling and computing a single solution at a given frequency, a sequence of solutions of increasing *h* or *P* complexity is assembled and solved. After each computation, an *a posteriori* error estimator analyses the result and defines new order and mesh refinements until the solution is judged satisfactory [J. R. Stewart, T.J.R. Hughes: An a posteriori error estimator and hp-adaptive strategy for finite element discretizations of the Helmholtz equation in exterior domains, Finite Elements in Analysis and Design, Volume 25, Issues 1-2, 1997].

In most cases, the *hP*-FEM approach is based on hierarchical functional spaces. In these spaces, higher-order basis $B(P + 1)$ are obtained from the basis $B(P)$ by adding new shape functions only. This is essential for *P*-adaptivity finite element codes since one does not have to change his shape functions completely when increasing the order of interpolation of a given element. Figure 4 discloses an example of hierarchical basis on a quadrangle for the order = 3 . The first row contains the shape functions for the order $P = 1$ which are not modified.

The *hP*-adaptive approach is computationally very efficient as it allows the computational effort, for a given problem, to be truly optimized. However, the downside is that automatic mesh refinements are required. Furthermore, in terms of programming, *hP*-FEM is very challenging. It is much harder to implement and to maintain a *hP*-FEM solver than a standard FEM solver.

Therefore, some prior art approaches propose to simply use high-order finite element approaches, without resorting to any adaptive refinement scheme (no *a priori* or *a posteriori* estimator is discussed) and not in the context of a multi-frequency computation. This is often referred to as *P* -FEM methods, like in the following references [S. Petersen, D. Dreyer and O. von Estorff: Assessment of finite and spectral element shape functions for efficient iterative simulations of interior acoustics, Computers Methods in Applied Mechanics and Engineering, 195, 6463-6478, 2006] and[P.E.J. Vos, S.J. Sherwin and R.M. Kirby: From h to p Efficiently: Implementing finite and spectral/hp element discretisations to achieve optimal performance at low and high order approximations. Journal of Computational Physics, 229, 2010]

Another approach is the following one. As already explained, in most acoustic applications, the solution of the stationary wave propagation problems is required at more than one frequency. Very often, it is required over a wide frequency range (the audio frequency range) and for a large number of frequencies. This type of problem is referred to as a frequency sweep problem. Methods to accelerate this multi-frequency problem are called Fast Frequency Sweep (FFS) methods. The FFS methods try to accelerate the standard low order FEM rather than resorting to higher order solutions. They solve the solution at a few particular frequencies and extrapolate the solution approximately in the neighbourhood based on the knowledge of the solution and of its high order derivatives like in the following reference [M. S.Lenzi, S.Lefteriu, H.Beriot, W.Desmet: A fast frequency sweep approach using Padé approximations for solving Helmholtz finite element models, Journal of Sound and Vibration, Volume 332, Issue 8, 2013].

The object of the instant invention is to optimize the simulation of sound emission and propagation of a system over a wide frequency range, by choosing the more efficient method in terms of accuracy, time of calculation and occupied memory.

## Summary of the invention

Accordingly, the instant application relates, in a first aspect, to a process for predicting the emission by a source of sound and its propagation within a surrounding medium, over a wide frequency range, according to claim 1.

The present invention lies at the intersection of both *hP*-adaptive methods and Fast Frequency Sweep Methods. In this invention, a novel and inventive approach is developed to more efficiently compute the frequency sweep problem, but without any approximation. This invention proposes an algorithm for solving wave propagation problem at multiple frequencies using a domain method based on hierarchical high-order discretization and on the use of an *a priori* estimator.

It is an advantage that, thanks to the use of high-order shape functions, the effort can be adapted to the need at each frequency (low effort at low frequency and large effort at high frequency).

It is a further advantage that, thanks to the use of an *a priori* estimator only one solution is computed per frequency and not a sequence of solutions like in prior art *hP* -adaptive FEM.

Finally, thanks to the hierarchy of the shape function basis, the mass and stiffness elementary matrices $K_{e,i}$ and $M_{e,i}$, relative to all elements, can be pre-computed before the frequency loop, in spite of the fact that the interpolation order varies from one frequency to the other..

All these aspects allow the time of calculation necessary for multi-frequency simulations to be reduced considerably.

A second aspect of the invention is realized by a software program product according to claim 7.

Other advantages and novel features of the invention will become more apparent from the following detailed description when taken in conjunction with the accompanying drawings.

**Brief description of the drawings**

The invention shall be better understood in light of the following description and of the accompanying drawings.

Figure 1 illustrates an example of sound emission inside a car cavity, with grey scale indicating the level of audible sound pressure inside the cavity at a given frequency;

Figure 2 illustrates a coarse mesh of a car, required for a low frequency $f_1$;

Figure 3 illustrates a refined mesh of the car of Figure 2, required for a high frequency $f_{Nf}$;

Figure 4 illustrates the hierarchical basis for a given order P referred to hereinabove and herein below;

Figure 5 illustrates an intermediate solution of a typical *hP*-adaptive FEM on a given 2D simulation problem;

Figure 6 illustrates the final solution of the typical *hP*-adaptive FEM of the problem of Figure 5;

Figure 7 illustrates the repartition of the element orders as given by the a *priori* estimator on a simple 2D mesh at frequency $f_1$, wherein elements $e_1$ and

$e_2$ are presented;

Figure 8 illustrates the similar repartition of the element orders as given by the *a priori* estimator on a simple 2D mesh at frequency $f_{Nf}$ wherein elements $e_1$ and $e_2$ are presented;

Figure 9, Figure 10 and Figure 11 illustrate the flowcharts of a preferred sequence of the process of the invention, Figure 9 illustrating the computation process of the maximum element order $P_{e,max}$, Figure 10, the computation process of all the elementary matrices based on $P_{e,max}$ and, Figure 11, the final phase of multi-frequency computation and

Figure 12 illustrates a schematic presentation of the hierarchically embedded elementary matrices.

**Description of illustrative embodiments**

The present invention described here proposes an efficient implementation of a hierarchic high-order domain method (FEM or DGM) to more efficiently resolve frequency sweep problems through an efficient multi-frequency strategy based on a dedicated *a priori* error estimator. No *P*-adaptive or *h*-adaptive schemes are considered in the context of the invention, the mesh is fixed and only one computation is performed per frequency.

Using the hierarchic properties of the finite element space, the weak formulation is computed only once, typically at the largest frequency of interest. The submatrices are then simply extracted and assembled at lower frequencies based on the a-priori error estimator.

This method lies in the conjunction of three concepts

- the use of an *a priori* error estimator,
- the use of hierarchy to construct the mass and stiffness matrix,
- the multi-frequency computation.

1) The first concept being used is the <u>*a priori* error estimator.</u> In *hP*-FEM methods, *a priori* error estimators are sometimes used to help designing the initial mesh in the *hP*-refinement process. The *a priori* error estimator denotes the pre-processing technique that will, prior to the equation solving, assign a given interpolation order to each element inside the finite element mesh. It is a function that outputs the order $P_{e,i}$ required on a given 1 D, 2D or 3D element e (line, triangle, quadrangle, tetrahedron, hexahedron, prism) at a given frequency $f_i$ based on:

- the characteristic element length $h_e$ (for instance the maximum edge length),
- the frequency value $f_i$,
- the characteristic local medium properties (speed of sound $c_{0_e}$, mean flow magnitude if any).

In first approximation, the following equation can be applied to approach $P_{e,i}$ :

$$P_{e,i} = 6\frac{h_e f_i}{c_{0e}}$$

This equation guarantees that the density of degrees of freedom per element is equal to 6.

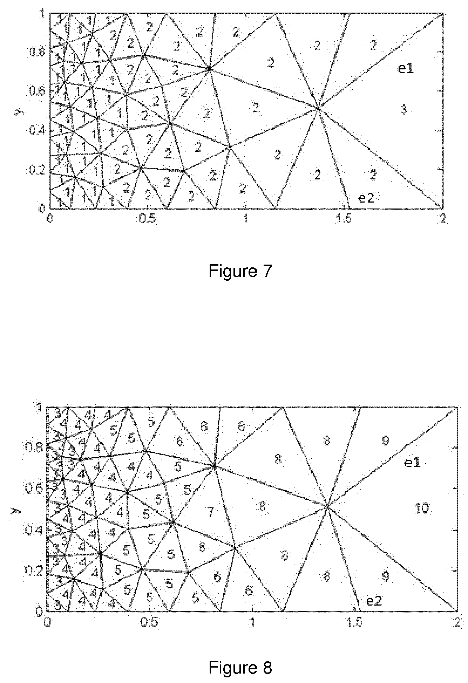

By way of examples, Figure 7 and Figure 8 illustrate how this formula can be adopted in practice to define the element order in an example structure (a rectangular mesh). Figure 7 and Figure 8 represent an example of repartition of element order $P_{e,i}$ in a mesh at a frequency $f_1$ and $f_2$, respectively, with $f_2$ being higher than $f_1$. Element orders $P_{e,i}$ have been determined by using an *a priori* estimator. Those two figures indicate that the order is directly proportional to the element size and to the frequency value. If the speed of sound $c_{0_e}$ is not frequency dependent (which is the case most of the time), it also indicates that the largest order will be typically found at the highest frequency of interest $f_{Nf}$

For clarity purposes, two elements have been numbered $e_1$ and $e_2$ in Figure 7 and Figure 8. For those two elements,

$$P_{1,1} = 3 \ (e_1 \text{ at frequency } f_1)$$

$$P_{2,1} = 2 \ (e_2 \text{ at frequency } f_1)$$

$$P_{1,2} = 10 \ (e_1 \text{ at frequency } f_2)$$

$$P_{2,2} = 9 \ (e_2 \text{ at frequency } f_2)$$

2) The second concept being used in the present invention is the hierarchy. With low-order methods, the system assembly (the evaluation of the elementary matrices) is rather inexpensive in comparison with the system solving (the factorization of the global system matrix). With high-order methods, the effort balance between these two major operations is modified and the evaluation of the elementary matrices can become as computationally intensive as the system solving due to the presence of high-order integrals in the elementary equations.

Here, the hierarchy is not used

- to increase the order *a posteriori* on a given element to improve the solution at one frequency (like which is done in the hp-adaptive methods)

   but
- to increase *a priori* the order of the full mesh from one frequency to the other in view of accelerating the computation of multiple frequencies.

3) The third concept being used in the present invention is the multi-frequency computation. It refers to the fact that the computation is done over a wide frequency range.

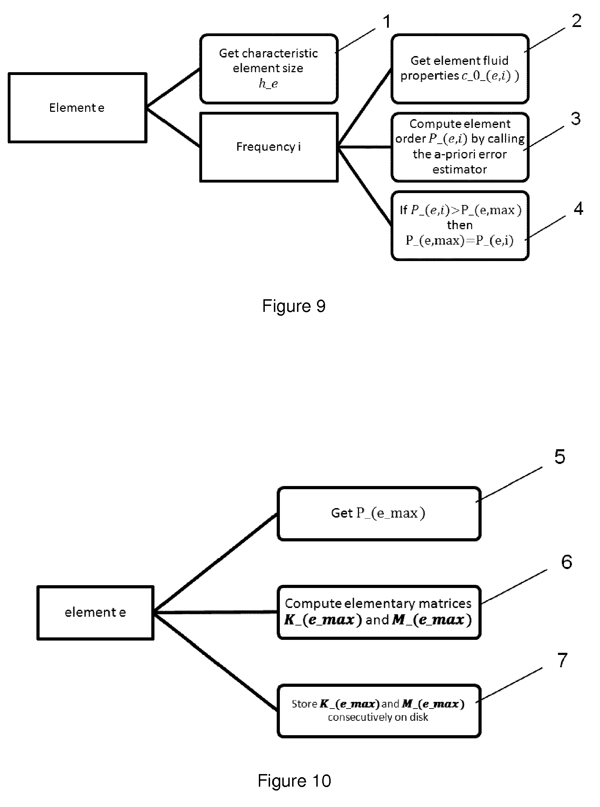

An embodiment of a process for predicting the emission by a source of sound and its propagation within a surrounding medium, over a wide frequency range, is illustrated Figure 9, Figure 10 and Figure 11.

The list of inputs provided by the user is the following:

- a mesh of $N_e$ elements suitable for Finite Element or Discontinuous Galerkin Methods representing the problem,
- a set of boundary conditions, sources and/or material properties defining the problem,
- a list of $N_f$ frequencies $F = [f_1, f_2, ..., f_{Nf}]$ in ascending order.

The process begins with a pre-processing part which can be divided into two phases:

- the maximum element order assessment,
- the maximum elementary matrix computation.

The first phase of the pre-processing part is the maximum element order assessment. During this phase, an element order $P_{e,i}$ is associated to each element e and at each frequency $f_i$ by calling an *a priori* estimator for each element in the mesh. Then, a maximum element order $P_{e,max}$ is determined for each element, over the frequency range.

In mathematical form, this can be written as:

$$P_{e,max} = \max_i P_{e,i}$$

Coming back to our previous example relative to Figure 7 and Figure 8, this phase of maximum element order assessment would result in:

$P_{1,max} = 10$ and
$P_{2,max} = 9$.

The complete process of this first phase is presented Figure 9.

In a first step (1) of the process, the mesh, given as an input, is read and characteristic element dimension $h_e$ is obtained for each element.

For each element e and for each frequency $f_i$:

- In step (2), local fluid properties are introduced.
- In step (3) and step (4), an *a priori* estimator is called to determine the maximum element order $P_{e,max}$ associated to each element. In case the fluid properties are not frequency dependent, the maximum order will be determined from the value at the maximum frequency of analysis $f_{Nf}$. In case of frequency dependent fluid materials, other scenarios may occur.

At the end of this first phase of the pre-processing part, a maximum element order $P_{e,max}$ is stored for each element, in an array of size $N_e$.

The second phase of the pre-processing part is the maximum elementary matrix computation.

The complete process of this second phase is presented in Figure 10.

For each element e:

- In step (5), the maximum order element $P_{e,max}$ is loaded.
- Then, in step (6), the frequency independent elementary mass and stiffness matrices $\boldsymbol{M_{e,max}}$ and $\boldsymbol{K_{e,max}}$, respectively, are formed by using the maximum element order $\boldsymbol{P_{e,max}}$.
- Consecutively, in step (7), those elementary matrices $\boldsymbol{M_{e,max}}$ and $\boldsymbol{K_{e,max}}$, are stored on disks in binary format.

It is important to notice here that, thanks to the *a priori* estimator, elementary matrices $\boldsymbol{K_{e,max}}$ and $\boldsymbol{M_{e,max}}$ are computed only once for each element, for an order corresponding to the maximum order element. There is no frequency loop in this phase.

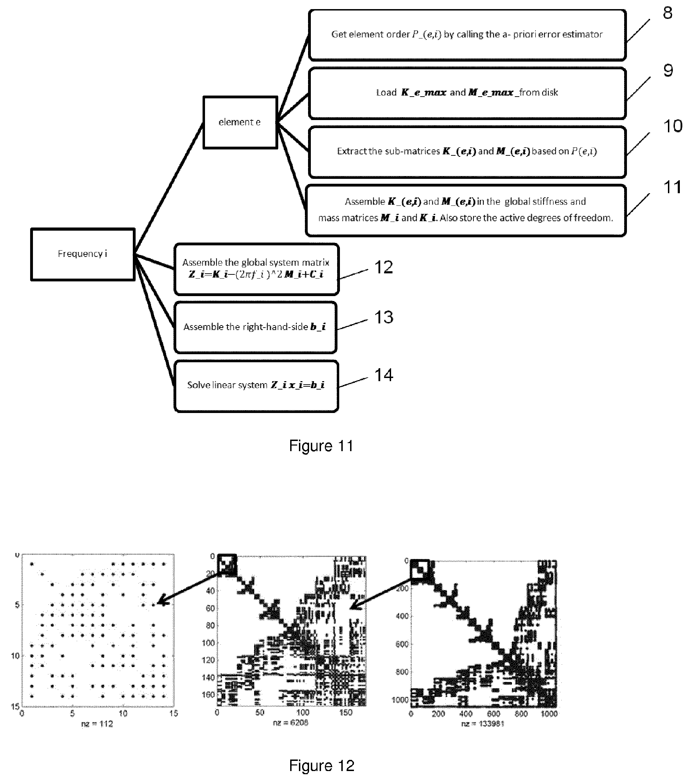

After completion of these two pre-processing phases, the multi-frequency computation part can begin with a loop over the frequencies required by the user. The complete process of this second part is presented Figure 11.

For each frequency $f_i$,

- for each element *e*:

  o First, in step (8), the order of the element $P_{e,i}$ required for this frequency and this element is computed.
  o Then, in step (9), the maximum elementary matrices $\boldsymbol{K_{e,max}}$ and $\boldsymbol{M_{e,max}}$ corresponding to $P_{e,max}$ are retrieved.
  o In step (10), the elementary matrices $\boldsymbol{K_{e,i}}$ and $\boldsymbol{M_{e,i}}$ corresponding to the interpolation order $\boldsymbol{P_{e,i}}$ are extracted out of $\boldsymbol{K_{e,max}}$ and $\boldsymbol{M_{e,max}}$. The use of hierarchy is crucial for this step. In prior art, $\boldsymbol{K_{e,i}}$ and $\boldsymbol{M_{e,i}}$ matrices were computed from scratch at each frequency whereas in this present invention, due to the hierarchic structure of the basis, the matrices corresponding to $P_{e,i}$ are contained as a subset of the matrices for $P_{e_{max}}$. This is illustrated in Figure 12, where it is to be noticed that the matrices of lower orders are contained in the matrices of higher orders.
  o In step (11), the elementary matrices $\boldsymbol{K_{e,i}}$ and $\boldsymbol{M_{e,i}}$ are assembled into global matrices $\boldsymbol{K_i}$ and $\boldsymbol{M_i}$, representing, respectively, the stiffness and the mass of the system at frequency $f_i$. In step (11), the list of active degrees of freedom (the subset of unknowns which is needed for this particular frequency) is also stored.

Then, after the achievement of the loop over the elements,
for each frequency $f_i$:

- In step (12), the matrix corresponding to this particular frequency $f_i$ is assembled

$$\boldsymbol{Z_i}(f_i) = \boldsymbol{K_i} - (2\pi f_i)^2 \boldsymbol{M_i} + \boldsymbol{C_i}(f_i).$$

If frequency dependent features are needed (like boundary conditions) their contribution is added in $C_i(f_i)$. Typically $Z_i$ will be very small at low frequencies (where the $P_{e,i}$ are small) and larger as the frequency approaches the maximum frequency. The computational effort is therefore implicitly adapted for each frequency.
- In step (13) the right-hand-side representing the sources is assembled
- In step (14), the system is then solved using a linear solver.

The advantage of the method described above is based on the fact that the effort is adapted at each frequency based on the a priori error estimator and on the fact that the elementary matrices are evaluated only once, before the frequency loop, which reduces considerably the time of calculation necessary for multi-frequency simulations.

**Claims**

1. A process for predicting the emission by a source of sound and its propagation within a surrounding medium, over a wide frequency range,
   wherein the system, including the source and the surrounding medium, has been represented by small and simple elements e,
   for each element e and each frequency $f_i$,

   - a parameter $\boldsymbol{P_{e,i}}$ is associated to the element by an a priori error estimator (3), characterizing the polynomial degree used to approximate the sound field, at frequency $f_i$,
- a parameter $P_{e,max}$ is determined for the element (4), corresponding to the maximum $P_{e,i}$ parameter calculated by the estimator over the frequency range,

for each element e,

- elementary matrices $K_{e,max}$ and $M_{e,max}$ characterizing the contribution by the element to the stiffness and the mass, respectively, of the system, are determined using said parameter $P_{e,max}$ (6),

for each frequency $f_i$,

o for each element e,

■ parameter $P_{e,i}$ is used to determine the polynomial degree used to approximate the sound field (8),
■ elementary matrices $K_{e,i}$ and $M_{e,i}$, relative to all elements, are extracted out of the matrices $K_{e,max}$ and $M_{e,max}$ and are assembled into global matrices $K_i$ and $M_i$ (10) (11), representing, respectively, the stiffness and the mass of the system,

o a global matrix system $Z_i$ is established on the basis of global matrices $K_i$ and $M_i$ (12),
o the global matrix system is solved using a linear solver (14).

**2.** A process according to claim 1, wherein a mesh that represents the system is given as an input at the beginning of the process.

**3.** A process according to anyone of claims 1 and 2, wherein a list of discrete frequencies at which the frequency range has to be sampled is given as an input at the beginning of the process.

**4.** A process according to anyone of claims 1 to 3, wherein a set of boundary conditions, sources and material properties of the system is given as an input at the beginning of the process.

**5.** A process according to anyone of claims1 to 4, wherein local fluid properties are introduced for each element e (1).

**6.** A process according to anyone of claims 1 to 5, wherein the global matrix system $Z_i$ has the following form:

$$Z_i(f_i) = K_i - (2\pi f_i)^2 M_i + C_i(f_i)$$

with $K_i$ and $M_i$, representing, respectively, the stiffness and the mass of the system, $C_i(f_i)$ all other frequency dependent terms arising from the boundary conditions, and $f_i$ being the frequency of concern.

**7.** A computer product for carrying out the software steps of the process of anyone of claims 1 to 6.

**Patentansprüche**

**1.** Verfahren zum Vorhersagen der Emission einer Schallquelle und ihrer Ausbreitung in einem umgebenden Medium über einen weiten Frequenzbereich,
wobei das System, einschließlich der Quelle und des umgebenden Mediums, durch kleine und einfache Elemente e repräsentiert wird,
für jedes Element e und jede Frequenz $f_i$,

- dem Element durch einen A-priori-Schätzer (3) ein Parameter $P_{e,i}$ zugeordnet wird, der den Grad des Polynoms charakterisiert, der verwendet wird, um das Schallfeld bei der Frequenz $f_i$ zu approximieren,
- ein Parameter $P_{e,max}$ für das Element (4) bestimmt wird, der dem maximalen Parameter $P_{e,i}$ entspricht, der durch den Schätzer über den Frequenzbereich berechnet wird,

für jedes Element e,

- Elementarmatrizen $K_{e,max}$ und $M_{e,max}$, die den Beitrag des Elements zu der Steifigkeit bzw. der Masse des Systems charakterisieren, unter Verwendung des Parameters $P_{e,max}$ bestimmt werden (6),

für jede Frequenz $f_i$,

∘ für jedes Element e,

■ der Parameter $P_{e,i}$ verwendet wird, um den Grad des Polynoms zu bestimmen, der verwendet wird, um das Schallfeld zu approximieren (8),
■ Elementarmatrizen $K_{e,i}$ und $M_{e,i}$ relativ zu allen Elementen aus den Matrizen $K_{e,max}$ und $M_{e,max}$ extrahiert werden und zu globalen Matrizen $K_i$ und $M_i$ (10) (11) zusammengefügt werden, die die Steifigkeit bzw. die Masse des Systems repräsentieren,

○ ein globales Matrixsystem $Z_i$ auf der Basis der globalen Matrizen $K_i$ und $M_i$ erstellt wird (12),
○ das globale Matrixsystem unter Verwendung eines linearen Lösers gelöst wird (14).

2. Verfahren nach Anspruch 1, wobei ein Gitter, das das System repräsentiert, als Eingabe zu Beginn des Verfahrens vorgegeben wird.

3. Verfahren nach einem der Ansprüche 1 und 2, wobei eine Liste von diskreten Frequenzen, bei denen der Frequenzbereich abgetastet werden soll, als Eingabe zu Beginn des Verfahrens vorgegeben wird.

4. Verfahren nach einem der Ansprüche 1 bis 3, wobei ein Satz von Randbedingungen, Quellen und Materialeigenschaften des Systems als Eingabe zu Beginn des Verfahrens vorgegeben wird.

5. Verfahren nach einem der Ansprüche 1 bis 4, wobei lokale Fluideigenschaften für jedes Element e eingeführt werden (1).

6. Verfahren nach einem der Ansprüche 1 bis 5, wobei das globale Matrixsystem $Z_i$ die folgende Form hat:

$$Z_i(f_i) = K_i - (2\pi f_i)^2 M_i + C_i(f_i)$$

wobei $K_i$ und $M_i$ jeweils die Steifigkeit und die Masse des Systems repräsentieren, $C_i(f_i)$ alle anderen frequenzabhängigen Terme, die aus den Randbedingungen entstehen, repräsentiert und $f_i$ die Frequenz von Interesse ist.

7. Computerprodukt zum Ausführen der Software-Schritte des Verfahrens nach einem der Ansprüche 1 bis 6.

**Revendications**

1. Processus de prédiction de l'émission par une source de son et de sa propagation dans un milieu environnant, sur un grand domaine de fréquence,
dans lequel le système, incluant la source et le milieu environnant, a été représenté par des éléments e petits et simples,
pour chaque élément e et chaque fréquence $f_i$,

- un paramètre $P_{e,i}$ est associé à l'élément par un estimateur (3) d'erreur a priori, caractérisant le degré polynomial utilisé pour donner une approximation du champ sonore à la fréquence $f_i$,
- un paramètre $P_{e,max}$ est déterminé pour l'élément (4), correspondant au paramètre maximum $P_{e,i}$ calculé par l'estimateur sur le domaine de fréquence,
pour chaque élément e,
- des matrices $K_{e,max}$ et $M_{e,max}$ élémentaires caractérisant la contribution par l'élément à la rigidité et à la masse, respectivement, du système, sont déterminées en utilisant le paramètre $P_{e,max}$ (6),
pour chaque fréquence $f_i$,

o pour chaque élément e,

■ un paramètre $P_{e,i}$ est utilisé pour déterminer le degré polynomial utilisé pour donner une approximation du champ (8) sonore,
■ des matrices $K_{e,i}$ et $M_{e,i}$ élémentaires se rapportant à tous les éléments sont extraites des matrices $K_{e,max}$ et $M_{e,max}$ et sont assemblées en des matrices $K_i$ et $M_i$ (10) (11) globales, représentant, respectivement, la rigidité et la masse du système,

o un système $Z_i$ global de matrice est établi sur la base de matrices $K_i$ et $M_i$ (12),
o le système de matrice global est résolu en utilisant un résolveur (14) linéaire.

2. Processus suivant la revendication 1, dans lequel une maille, qui représente le système, est donnée comme entrée au début du processus.

3. Processus suivant l'une quelconque des revendications 1 et 2, dans lequel une liste de fréquences discrètes, auxquelles le domaine de fréquence doit être échantillonné, est donnée comme entrée au début du processus.

4. Processus suivant l'une quelconque des revendications 1 à 3, dans lequel un jeu de conditions aux limites, de sources et de propriétés de matière du système est donné comme entrée au début du processus.

5. Processus suivant l'une quelconque des revendications 1 à 4, dans lequel des propriétés locales de fluide sont introduites pour chaque élément e (1).

6. Processus suivant l'une quelconque des revendications 1 à 5, dans lequel le système $Z_i$ global de matrice a la forme suivante :

$$Z_i(f_i) = K_i - (2\pi f_i)^2 M_i + C_i(f_i)$$

avec $K_i$ et $M_i$ représentant, respectivement, la rigidité et la masse du système $C_i(f_i)$, tous les autres termes dépendant de la fréquence provenant des conditions aux limites et $f_i$ étant la fréquence à laquelle on s'intéresse.

7. Produit informatique pour effectuer les stades de logiciel du processus suivant l'une quelconque des revendications 1 à 6.

Figure 1

EP 2 816 332 B1

Figure 2

Figure 3

Figure 4

Figure 5

Figure 6

Figure 7

Figure 8

Figure 9

Figure 10

Figure 11

Figure 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **I. BABUSKA ; B.Q. GUO.** The h, p and h-p version of the finite element method: basis theory and applications. *Advances in Engineering Software,* 1992, vol. 15
- **J. R. STEWART ; T.J.R. HUGHES.** An a posteriori error estimator and hp-adaptive strategy for finite element discretizations of the Helmholtz equation in exterior domains. *Finite Elements in Analysis and Design,* 1997, vol. 25
- **S. PETERSEN ; D. DREYER ; O. VON ESTORFF.** Assessment of finite and spectral element shape functions for efficient iterative simulations of interior acoustics. *Computers Methods in Applied Mechanics and Engineering,* 2006, vol. 195, 6463-6478
- **P.E.J. VOS ; S.J. SHERWIN ; R.M. KIRBY.** From h to p Efficiently: Implementing finite and spectral/hp element discretisations to achieve optimal performance at low and high order approximations. *Journal of Computational Physics,* 2010, vol. 229
- **M. S.LENZI ; S.LEFTERIU ; H.BERIOT ; W.DESMET.** A fast frequency sweep approach using Padé approximations for solving Helmholtz finite element models. *Journal of Sound and Vibration,* 2013, vol. 332